# EUROPEAN PATENT SPECIFICATION

(11) **EP 0 728 048 B1**
(45) Date of publication and mention of the grant of the patent: **30.06.1999**
(21) Application number: 95900213.0
(22) Date of filing: 08.11.1994
(51) Int. Cl.: B09B 1/00, E02D 31/00

(54) **WASTE TREATMENT**
ABFALLVERARBEITUNG
TRAITEMENT DES DECHETS

(30) Priority: 09.11.1993 GB 9323091; 03.02.1994 GB 9402092
(43) Date of publication of application: 28.08.1996
(73) Proprietor: GEOHESS (UK) LIMITED, Stowe, Buckingham MK18 5LJ (GB)
(72) Inventor: BACHELL, Amanda, Bedfordshire LU7 7SQ (GB); AZIMRAIEYAT, James Shahdad, 18 Angus Drive, Buckinghamshire MK3 7NF (GB); WHEATLEY, Andrew John, 27 Orchard Lane, Bedfordshire MK43 7BP (GB); WHEELER, Paul Watson, Stowe, Buckinghamshire MK 5LU (GB); HUCKLE, Chrisropher William, Ashby Fields Daventry, Northants N11 5RE (GB)
(74) Representative: Luckhurst, Anthony Henry William
(86) International application number: GB9402446
(87) International publication number: WO9513147

(56) References cited:
- DE-A- 3 809 128
- DE-A- 4 114 503
- US-A- 4 608 126
- PATENT ABSTRACTS OF JAPAN vol. 7, no. 112 (M-215) 17 May 1983 & JP,A,58 033 618 (TSUNETAKA YASUKAGAWA) 26 February 1983
- PATENT ABSTRACTS OF JAPAN vol. 6, no. 86 (M-131) 25 May 1982 & JP,A,57 024 710 (MITSUBISHI PETROCHEM. CO. LTD.) 9 February 1982
- PATENT ABSTRACTS OF JAPAN vol. 18, no. 157 (C-1180) 16 March 1994 & JP,A,05 329 458 (BRIDGESTONE CORP.) 14 December 1993
- PATENT ABSTRACTS OF JAPAN vol. 17, no. 497 (M-1476) 8 September 1993 & JP,A,05 125 718 (BRIDGESTONE CORP.) 21 May 1993

## Description

The present invention relates to a method of covering waste, refuse or other material. The invention is applicable to the handling of waste, refuse or other material which is disposed of in areas such as landfill and land raising sites, waste and refuse establishments and mineral quarries.

It is current practice to provide daily cover for landfill sites at times when they are not actually being filled e.g. overnight. The covering is provided for several reasons including the following:-
(i) to reduce odours from decaying waste;
(ii) to deter vermin, birds and flies;
(iii) to minimise wind-blob litter;
(iv) to improve the aesthetic appearance of the site.

At the moment valuable non-renewable mineral resources are being used to provide this daily cover. Where clay is used, it is very lumpy and non-flexible making it almost impossible to lay it less than 200 mm deep to provide a reasonable cover. The next day's waste is deposited over the cover layer and thus layers of waste are separated by cover layers which can be impermeable. As a result they inhibit gases released by the decaying matter from migrating and these have to be removed in other ways.

A number of disadvantages arise from the use of minerals such as clay as daily cover, e.g.:-
(i) a potentially valuable, non-renewable, mineral resource is wasted;
(ii) the material cannot readily be recovered and occupies valuable void which could otherwise be used, for example, for depositing refuse;
(iii) if the cover is impermeable it has the effect of dividing the landfill into relatively small, individual, sub-cells which makes long-term management difficult because the sub-cells will tend to behave as individuals and not en masse; and
(iv) if the daily cover is impermeable it will prevent the migration of fluids, gases and/or liquids and delay final stabilisation of the site.

WO 92/16317 describes a synthetic covering for waste, formed from liquid, binder, cellulose fibers and plastic fibers.

US-A-4973196 describes the use of plastic sheets or films between successive layers of waste to form drainage layers.

US-A-4909667 describes the use of a daily cover of canvas.

JP-A-5833618 describes the use of three-dimensional porous sheeting which is laid between successive layers of waste to aerate the site.

The present invention provides a method of handling refuse at a landfill site or the like, in which the refuse is deposited in successive layers and a layer of sheet material is used to cover the refuse between successive deposits, characterised in that the sheet material which is used is hessian.

The sheet material may be removed before the next layer of waste, refuse or other material is deposited so that it simply provides a temporary cover or it may be left and waste deposited on top thereby providing a stack comprising layers of waste separated by layers of sheet material. However, in the preferred embodiment of the invention the material may be removed and reused until such time as it is no longer in a condition where it is reusable, at which point it will be left on and the next layer of waste, refuse or other material placed on top.

The layers of sheet material are preferably so that the gases and liquid, produced by the decaying material, can migrate rather than building up. For each layer of waste, a number of pieces of material may be used, preferably stitched or jointed together or fixed down. Thus, in the case of permeable material, escaping fluids or rainwater can migrate either through the material or from between the stitched or jointed pieces. Other ways of joining the pieces of material are set forth in the dependent claims.

The sheet material is biodegradable.

The new sheets of material are preferably dispensed from a roll which may be pulled by a tractor or other off-road vehicle which can be driven across the waste. A special implement for attachment to the vehicle either directly or indirectly on a towed sled or trailer may be designed for this purpose. Once used the material will be laid and removed using a bar to which the sheets will be attached and the bar pulled to and fro across the day's layer of waste or other material using either a machine such as a tractor or off-road vehicle or manpower.

The sheet material which is used is hessian, which is biodegradable and relatively inexpensive. This can be dyed, soaked with water or treated with chemicals, as required.

The sheets of material, once laid, may be stitched or jointed together or fixed down at their edges and the material loaded down, as necessary, to prevent the sheets from being lifted. Such stitching, jointing or fixing will preferably be removable in order that the material can be re-used or re-positioned and then re-stitched, re-jointed or fixed down again.

Certain embodiments of the invention will now be described by way of example only and with reference to the accompanying drawings in which:-
- Figure 1: is a cross sectional view of a landfill site being filled according to the method of the invention;
- Figure 2: is a top plan view of part of the landfill site of Figure 1;
- Figure 3: shows a dispenser for the sheet material;
- Figure 4: illustrates a method of laying and removing the material.

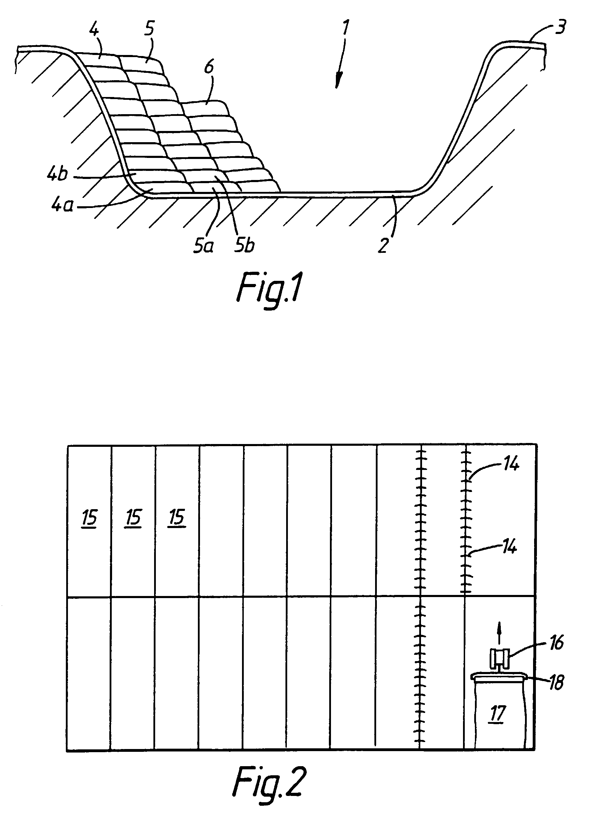

Waste and refuse is frequently deposited in large holes in the ground, these are commonly referred to as landfill sites. The landfill site shown in Figure 1 comprises a hole 1 which is lined with an impermeable liner 2 (not to scale). The site may cover an area of many hectares.

For the purpose of filling, the area of the hole 1 is divided into smaller areas known as cells. Each cell is usually built up layer by layer to the ground level 3 before the next cell is filled. Each layer is commonly referred to as a "lift". Thus, a call consists of vertically adjacent lifts. Figure 1 shows two full cells, 4 and 5, and a third cell, 6 being filled. Cell 4 is made up of lifts 4a, 4b etc., cell 5 is made up of lifts 5a, 5b etc.

Each cell is covered with a layer of sheet material overnight whilst it is being filled, this is preferably removed before the next day's waste layer is deposited. A typical day's waste layer might be about 2m deep. Figure 2 is a top plan view of one cell with its overnight cover. The cover consists of several rectangular sheets 15 of hessian laid edge to edge, such edges then pulled together to allow a lap required for stitching, jointing or fixing down. A vehicle 16 is shown dispensing the last sheet 17 from a large roll 18 which it is towing or carrying. When the last sheet has been laid the vehicle leaves and in most circumstances it is preferable that the vehicle does not drive over the cover material.

The adjoining edges of each sheet will be either held together and machine stitched, jointed or fixed down 14 to provide total coverage of the day's waste layer and prevent each separate sheet of material from moving. Such stitching will be done preferably using a hand held industrial sewing machine and potentially mechanically laid and sewn automatically. Such stitching will be easily removable and the material simply re-sewn, re-jointed or fixed down the next time the sheets are placed over the waste.

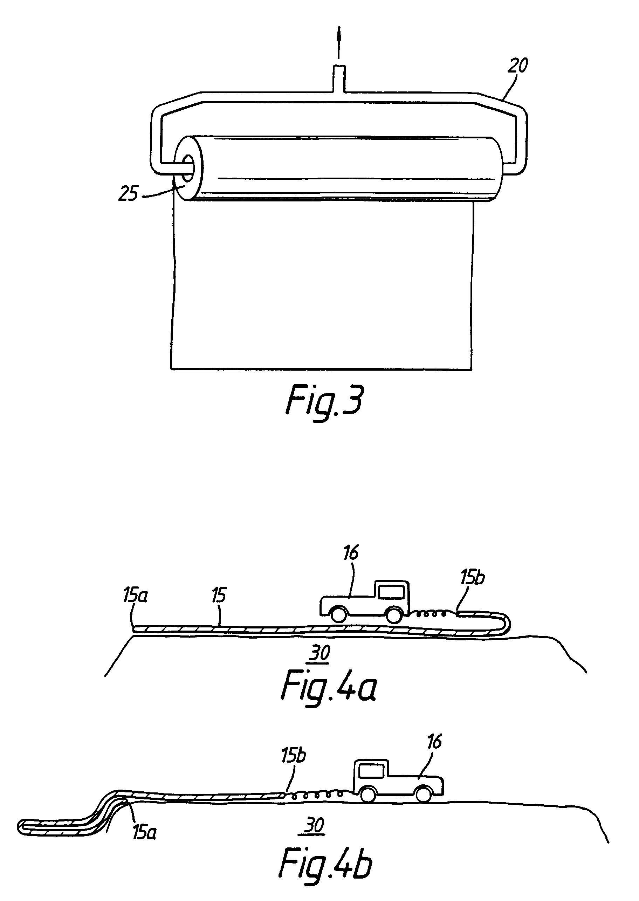

Figure 3 shows a sheet material dispenser which may be used in connection with the invention. This consists of a large frame 20 on which the material roll 25 is rotatably mounted. The free edge of the material 17 may be held down so that as the roll is moved in the direction of arrow 'X' the material unwinds.

The dispenser is designed to be towed or carried by a vehicle, or mounted on a sled or trailer.

The use of material dispensed from a roll is suitable when the material is new. If the material is to be taken up between layers of waste, refuse or other material, it may simply be attached to a bar at one edge and drawn across the surface of the waste, as shown in Figure 4. A sheet 15 is pegged or otherwise secured at one edge 15a and attached to a bar at its opposite edge 15b so that it can be drawn across the surface of the waste 30 to position it (Figure 4(b)) or drawn back across itself to take it up (Figure 4(a)). The material in this case must be fairly strong but it should be borne in mind that the occasional hole made by the vehicle or the underlying waste, refuse or other material will not be a problem since the sheet can be repaired by stitching or other suitable means and is intended to be permeable anyway.

When a landfill site is completely full it is usually covered with a layer of impermeable material. This could be a natural cap made from a material such as clay with a low permeability or high density polyethylene, followed by soil, so that the area can be re-used, for example as agricultural land. This material, usually known as "capping" material, has to be of low permeability so that it reduces rainfall infiltration into the site and prevents gas migration. It must be of very high quality and strength so that vehicles can drive over it without causing damage, and it must not be biodegradable. In contrast, the material used for the intermediate covering of the present invention is not required to have any of these properties.

Whilst the above description refers specifically to landfill sites, it will be appreciated that the invention is equally applicable to other waste disposal methods including land raising as well as mineral quarries and other areas of loose material where short term protection is required.

## Claims

1. A method of handling refuse at a landfill site or the like, in which the refuse is deposited in successive layers and a layer of sheet material is used to cover the refuse between successive deposits, characterised in that the sheet material which is used is hessian.

2. A method as claimed in claim 1, characterised in that the refuse is covered with several pieces of the sheet material placed adjacent to or overlapping each other.

3. A method as claimed in claim 2, characterised in that the adjacent or overlapping pieces of sheet material are joined together after laying.

4. A method as claimed in claimed in claim 3 characterised in that the pieces of sheet material are stitched together.

5. A method as claimed in claim 3 characterised in that the pieces of sheet material are stapled together.

6. A method as claimed in claim 3, characterised in that the pieces of sheet material are pegged to each other by pegs which penetrate the refuse.

7. A method as claimed in any one of the preceding claims, characterised in that the sheet material is removed before the succeeding layer of refuse is deposited.

8. A method as claimed in claim 7, characterised in that the sheet material which has been removed is used again to cover the deposited refuse.

9. A method as claimed in claim 7 or 8, when dependant from claim 2, characterised in that pieces of sheet material are separated from each other before removal.

10. A method as claimed in any of claims 1 to 9, characterised in that the or a said layer of sheet material is left in place and the succeeding layer of refuse is deposited over the layer of sheet material.

11. A method as claimed in any preceding claim characterised in that the layer of sheet material is weighted at least at its edges, after laying.

12. A method of handling waste in a landfill site, the method comprising the steps of
(a) depositing a layer of waste,
(b) covering the upper surface of the layer of waste with a layer of hessian,
(c) removing the layer of hessian after a period of time,
(d) depositing another layer of waste on the previously deposited layer of waste.

13. A method as claimed in claim 12, in which the layer of hessian laid in step (b) is re-used in a subsequent repetition of step (b).

## Patentansprüche

1. Verfahren zur Behandlung von Müll auf einer Deponie oder ähnlichem, auf welcher der Müll in aufeinanderfolgenden Lagen abgelagert wird und eine Lage Bahnmaterial verwendet wird, um den Müll zwischen aufeinanderfolgenden Ablagerungen zu bedecken, dadurch gekennzeichnet, daß das Bahnmaterial, das eingesetzt wird, Jutegewebe ist.

2. Verfahren nach Anspruch 1, dadurch gekennzeichnet, daß der Müll mit mehreren Längen des Bahnmaterials bedeckt wird, die aneinander angrenzend oder einander überlappend angeordnet werden.

3. Verfahren nach Anspruch 2, dadurch gekennzeichnet, daß die aneinander angrenzenden oder einander überlappenden Längen des Bahnmaterials nach dem Auflegen miteinander verbunden werden.

4. Verfahren nach Anspruch 3, dadurch gekennzeichnet, daß die Längen des Bahnmaterials zusammengenäht werden.

5. Verfahren nach Anspruch 3, dadurch gekennzeichnet, daß die Längen des Bahnmaterials mit Klammern zusammengeheftet werden.

6. Verfahren nach Anspruch 3, dadurch gekennzeichnet, daß die Längen des Bahnmaterials mit Pflöcken, die in den Müll eindringen, miteinander verbunden werden.

7. Verfahren nach einem der vorhergehenden Ansprüche, dadurch gekennzeichnet, daß das Bahnmaterial abgenommen wird, bevor die nachfolgende Lage Müll abgelagert wird.

8. Verfahren nach Anspruch 7, dadurch gekennzeichnet, daß das Bahnmaterial, das abgenommen worden ist, erneut zum Abdecken des abgelagerten Mülls genutzt wird.

9. Verfahren nach Anspruch 7 oder 8, in Abhängigkeit von Anspruch 2, dadurch gekennzeichnet, daß die Längen des Bahnmaterials vor dem Abnehmen voneinander getrennt werden.

10. Verfahren nach einem der Ansprüche 1 bis 9, dadurch gekennzeichnet, daß die oder eine genannte Lage des Bahnmaterials an ihrem Platz bleiben und die nachfolgende Lage des Mülls über der Lage des Bahnmaterials abgelagert wird.

11. Verfahren nach einem der vorhergehenden Ansprüche, dadurch gekennzeichnet, daß die Lage des Bahnmaterials nach dem Auflegen zumindest an den Rändern beschwert wird.

12. Verfahren zur Behandlung von Abfall auf einer Deponie, wobei das Verfahren die folgenden Schritte umfaßt:
(a) Ablagerung einer Lage Abfall,
(b) Bedecken der oberen Fläche der Lage Abfall mit einer Lage Jutegewebe,
(c) Abnehmen der Lage Jutegewebe nach einer Zeitspanne,
(d) Ablagerung einer weiteren Lage Abfall auf der vorher abgelagerten Lage Abfall.

13. Verfahren nach Anspruch 12, bei dem die Lage Jutegewebe, die im Schritt (b) aufgelegt worden ist, bei einer nachfolgenden Wiederholung von Schritt (b) wiederverwendet wird.

## Revendications

1. Procédé de manipulation de déchets sur un site de décharge ou un lieu similaire, dans lequel les déchets sont déposés en couches successives, une couche de matériau en nappe étant utilisée pour recouvrir les déchets entre les dépôts successifs, caractérisé en ce que le matériau en nappe utilisé est une toile de jute.

2. Procédé selon la revendication 1, caractérisé en ce que les déchets sont recouverts de plusieurs pièces de matériau en nappe agencées de manière adjacente les unes aux autres ou se chevauchant.

3. Procédé selon la revendication 2, caractérisé en ce que les pièces adjacentes ou à chevauchement du matériau en nappe sont assemblées après leur pose.

4. Procédé selon la revendication 3, caractérisé en ce que les pièces du matériau en nappe sont assemblées par piqûre.

5. Procédé selon la revendication 3, caractérisé en ce que les pièces de matériau en nappe sont assemblées par agrafage.

6. Procédé selon la revendication 3, caractérisé en ce que les pièces du matériau en nappe sont assemblées par chevillage par l'intermédiaire de chevilles pénétrant dans les déchets.

7. Procédé selon l'une quelconque des revendications précédentes, caractérisé en ce que le matériau en nappe est enlevé avant le dépôt de la couche de déchets suivante.

8. Procédé selon la revendication 7, caractérisé en ce que le matériau en nappe enlevé est réutilisé pour recouvrir les déchets déposés.

9. Procédé selon les revendications 7 ou 8, dépendantes de la revendication 2, caractérisé en ce que les pièces de matériau en nappe sont séparées les unes des autres avant l'enlèvement.

10. Procédé selon l'une quelconque des revendications 1 à 9, caractérisé en ce que la couche ou une dite couche de matériau en nappe est laissée en place, la couche suivante de déchets étant déposée au-dessous de la couche du matériau en nappe.

11. Procédé selon l'une quelconque des revendications précédents, caractérisé en ce que la couche de matériau en nappe est chargée, au moins au niveau de ses bords, après sa pose.

12. Procédé de manipulation de déchets dans un site de décharge, le procédé comprenant les étapes ci-dessous:
(a) dépôt d'une couche de déchets,
(b) couverture de la surface supérieure de la couche de déchets d'une couche de toile de jute,
(c) enlèvement de la couche de toile de jute après une certaine période de temps,
(d) dépôt d'une autre couche de déchets sur la couche de déchets déposée auparavant.

13. Procédé selon la revendication 12, dans lequel la couche de toile de jute déposée lors de l'étape (b) est réutilisée lors d'une répétition ultérieure de l'étape (b).
